(19) **Europäisches Patentamt / European Patent Office / Office européen des brevets**

(11) **EP 4 006 820 A1**

(12) **EUROPEAN PATENT APPLICATION**

(43) Date of publication:
**01.06.2022 Bulletin 2022/22**

(21) Application number: **20210657.1**

(22) Date of filing: **30.11.2020**

(51) International Patent Classification (IPC):
**G06T 3/40** (2006.01) **G01J 3/00** (2006.01)

(52) Cooperative Patent Classification (CPC):
**G06T 3/4061; G01J 3/28;** G01J 3/42

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ECOLE POLYTECHNIQUE FEDERALE DE LAUSANNE (EPFL)**
**1015 Lausanne (CH)**

(72) Inventor: **WEBLER, Forrest Simon**
**1004 Lausanne (CH)**

(74) Representative: **Weihs, Bruno Konrad**
**André Roland SA**
**P.O. Box 352**
**1000 Lausanne 22 (CH)**

(54) **SYSTEM AND METHOD FOR TRANSCODING SPECTRAL DATA WITH TASK-BASED OPTIMIZATION VIA SYMMETRIC NON-NEGATIVE MATRIX FACTORIZATION**

(57) A computer-implemented method for reconstructing/recovering high-resolution visible light spectral data at a target resolution d, that comprises obtaining a configuration of a low-resolution multi-channel imaging sensor of resolution p, the configuration being enabled to produce measurements results of any one of a plurality of n determined visible light spectra, the low-resolution multi-channel imaging sensor comprising a number p of optical sensors arranged at locations in the spectrometer corresponding each to an attributed measurable wavelength of the visible light, the configuration comprising a definition of the attributed measurable wavelength for each location. The method comprises obtaining a matrix L comprising a previously measured set of the plurality of n determined visible light spectra at a high-resolution resolution d, the resolution d being greater than the resolution p, constructing a vector of p channel peak wavelengths by determining the first p channels with the highest evenness to maximize encoded information. The method comprises obtaining a set of reference spectra from L by finding the first k cluster centers such that $f(H,k) = \min(||A-HH'||_2)$ to be used to fit regularization parameters for unknown spectra via Tikhonov regularization and adaptive dictionary learning.

FIG. 1

EP 4 006 820 A1

**Description**

**Technical Field**

The present invention relates to a system and method of encoding and decoding data from a high dimension to a low dimension and back again to a high dimension. More particular the system comprises a low-resolution multi-channel imaging sensor to measure a low-dimension spectrum of visible data.

**Background Art**

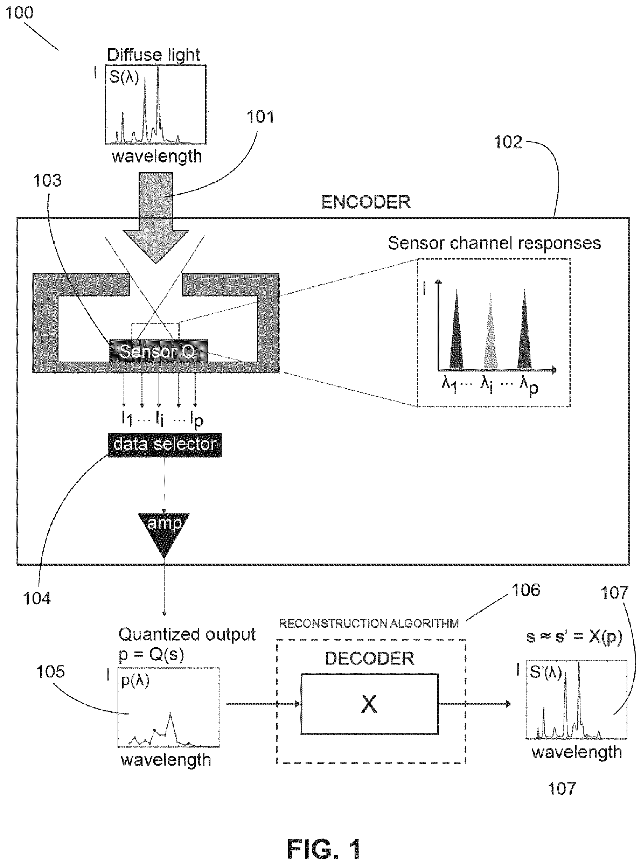

A transcoder takes data from an original input dimension, encodes it to a lower dimension and then resolves it back to a target high dimension which may or may not be the same as the original input dimension. Reference is made to figure 1, which contains a schematic illustration explaining a process of transcoding spectral data. A light source 100 directs diffused light 101, which reaches an entry of a spectrometer device 102. The spectrometer device 102 comprises a sensor 103 configured to measure a spectrum of the diffused light 101 spread over an array of p channels. Each of the p channels measures an intensity at a particular wavelength $\lambda_1$, ..., $\lambda_i$, ...$\lambda_p$. Hence a series of intensity measurements is provided to a data selector 104, where intensity values with predetermined indexes are extracted. The extracted intensity values produce a lossy spectrum $p(\lambda)$ as shown in graph 105.

When the data are encoded, a lot of information is lost, as illustrated in figure 1. A good reconstruction algorithm 106 will be able to solve for most of the missing data to reconstruct a spectrum 107 of the original light source with more resolution and precision, but fundamentally if key information is not encoded to begin with, even the best reconstruction algorithm will not perform well. Therefore, it is critical to design an encoder which captures the maximum information with the fewest number of samples, i.e., wavelength dependent intensity values. In spectroscopy these 'samples' are measurements taken by the sensor's 103 channels which have peak sensitivities at specific wavelengths. Conventional wisdom will tell you that the more channels with the narrowest filters will perform the best. While this is true, it is not possible in practice for low-cost compact spectrometers. Current state of the art filters are roughly Gaussian with limited full width at half maximum (FWHM) values around 20 nm. In addition, the more channels (i.e. filters) you have, the more expensive it is to manufacture the device, and current limitations place the number of filters between 1 and 20. Furthermore, the fewer the number of channels, the less data are generated meaning that the infrastructure needed to log and store data from such devices is reduced with the number of channels. This is important in applications where devices need to be as light as possible (i.e. for use in drones). So, it appears desirable to maximize the amount of useful information while minimizing the number of channels.

Accordingly, it is an aim of the present invention to provide a system and a method for optimizing hardware performance for spectral sensing.

It is a further aim of the present invention to provide a system and a method for reconstructing spectral data from low-dimensional data.

**Summary of Invention**

In a first aspect, the invention provides a computer-implemented method for reconstructing/recovering high-resolution visible light spectral data at a target resolution d, comprising obtaining a configuration of a low-resolution multi-channel imaging sensor of resolution p, the configuration being enabled to produce measurements results of any one of a plurality of n determined visible light spectra, the low-resolution multi-channel imaging sensor comprising a number p of optical sensors arranged at locations in the spectrometer corresponding each to an attributed measurable wavelength of the visible light, the configuration comprising a definition of the attributed measurable wavelength for each location. The method comprises obtaining a matrix L comprising a previously measured set of the plurality of n determined visible light spectra at a high-resolution resolution d, the resolution d being greater than the resolution p, constructing a vector of the p channel peak wavelengths by selecting the first p channels with the highest 'evenness' defined by J close to 1, whereby, for each possible channel we the evenness is obtained by

$$J = H'/H_{max}$$

where

$$H' = -\sum_{j=1}^{R} u_i \ln u_i$$

where

$$R = 1/e$$

where e is the error of the channel in the intensity domain such that if the percent error is ept % then e = ept / 100, and where $u_i$ is the number of spectra which produce a relative intensity value between i*e and i*e + e at a given channel location corresponding to a wavelength, divided by the total number of spectra in the library L which pass through at any intensity at that specific wavelength channel, and

$$H_{max} = \ln(R)$$

and, selecting the first p number of candidate wavelengths which produce values of J closest to 1 as the locations of the sensor channels such that no two channels are directly adjacent.

In a preferred embodiment, the computer-implemented method is further enabled for reconstructing / recovering high-resolution visible light spectral data at the target resolution d from a new measurement made with the low-resolution multi-channel imaging sensor at the sensor resolution p, the method comprising steps of:

a) identifying a set of reference spectra as priors, by applying a dimensional reduction algorithm comprising obtaining an affinity matrix A of the columns of L generated by

$$A_{i,j} = \begin{cases} d(s_i, s_j) & \text{if } i \neq j \\ 0 & \text{if } i = j \end{cases} \quad \text{where} \quad d(s_i, s_j) = \arccos\left[\frac{s_i(\lambda) \cdot s_j(\lambda)}{\|s_i(\lambda)\|\|s_i(\lambda)\|}\right]$$

where $d(s_i, s_j)$ is the spectral angle mapper (SAM) between two spectra $s_i$ and $\mathbf{s}_j$ in the library L, applying the symmetric non-negative matrix factorization (SymNMF) algorithm

$$\underset{H>0}{\operatorname{argmin}} f(H,k) \quad \text{where} \quad f(H,k) = \|A - HH'\|_F^2$$

whereby H is non-negative and has dimensions n x k where k is the number of clusters, and finding the number of k priors such that the variance in the objective function f(H,k) is minimized for k > number of nonnegative eigenvalues of A,
b) storing the reference spectra in a matrix B,
c) obtaining a simulated sensor output Q(L) by simulating the low-resolution multi-channel imaging sensor for each spectrum in the matrix L by applying a mathematical model for the multi-channel imaging sensor to each spectrum in the matrix L where

$$Q_i(s) = \left(\int_{\lambda 1}^{\lambda 2} s(\lambda) * R_i(\lambda) d\lambda\right)/(0.21 * \delta_i)$$

where l = 1,...,p and $\lambda_1$ and $\lambda_2$ are the minimum and maximum wavelengths of the measured range of the sensor and $\delta_l$ is the full width at half maximum of the $i^{th}$ channel response function $R_i(\lambda)$, and 0.21 is a constant valid only if $s(\lambda)$ is first normalized with the infinite norm $L_\infty$;
d) compiling the simulated sensor output Q(L) spectra into a matrix M of entry vectors of length p corresponding respectively to one of the simulated sensor output spectra;
e) comparing a new measurement Q(s) to a low dimensional copy m from the matrix M, by identifying the q-closest matches as defined as the Euclidean distance between p and a column of M, and in turn returning a new matrix N comprising the q-closest matches in M to the measured spectrum and their corresponding indices idx in M;
f) obtaining the best fit parameters for each of the reference spectra by comparing the known inputs for each of the reference spectra in B to the reconstructed output and storing the best fit parameters in a matrix P, such that the first column of P contains the best fit parameters for the reference spectrum in the first column of B;
g) obtaining to the best fit parameters in the $i^{th}$ column of matrix P by finding the closest match between $Q(B_i)$ and Q(s) using the Euclidean distance;

h) obtaining the reconstructed spectrum by solving

$$x = \min(\|xN - Q(s)\|_2 + \gamma\|x\|_2)$$

such that

$$s' = xL(idx)$$

and using only the high-resolution copies in L corresponding to the low-resolution copies in N in a final reconstruction and

$$s = \frac{1}{2h+1}[s'(i+h) + s'(i+h-1) + \ldots + s'(i-h)]$$

such that the reconstruction parameters h, $\gamma$, and q are used for the nearest reference spectra in B to recover the corresponding high-resolution spectrum from the low-dimensional sensor output Q(s).

In still a further preferred embodiment, low-resolution visible light spectral data are obtained from a multi-channel imaging sensor comprising between 1 and 20 channels.

In still a further preferred embodiment, regularization parameters and reconstruction of the closest match are performed through an adaptive regularization method including dictionary optimization, Tikhonov regularization, and smoothing with a moving average filter.

In a second aspect, the invention provides a non-transitory computer-readable medium storing instructions that, when executed by a data processing apparatus, cause the data processing apparatus to perform the computer-implemented method for reconstructing/recovering high-resolution visible light spectral data at a target resolution d as described herein above in this chapter.

In still a further preferred embodiment, the data processing apparatus comprises any one of a computer and a microchip.

In a third aspect, the invention provides a low-resolution multi-channel imaging sensor operatively connected with a data processing apparatus comprising instructions configured to operate the multi-channel imaging sensor to perform the computer-implemented method for reconstructing/recovering high-resolution visible light spectral data at a target resolution d as described herein above in this chapter.

In still a further preferred embodiment of the low-resolution multi-channel imaging sensor, the data processing apparatus comprises any one of a computer and a microchip.

**Brief Description of Drawings**

The invention will be better understood through the description of example embodiments, and in reference to the figures, wherein:

- figure 1 is a schematic illustration explaining a process of transcoding spectral data according to prior art;

- figure 2 represents, on the left, a diagram of a spectral library L with rows corresponding to values at each measured wavelength of a spectrum and columns to different spectral observations, and right, an affinity matrix comparing each of the wavelength vectors; and

- figure 3 represents how maximally informative channels can be selected from an initial library of spectra. In this example the library L contains 3 example signals.

Same references will be used to designate same or similar features throughout all the figures.

**Description of Embodiment**

In a first aspect, the invention concerns a system and a method that enable to make use of a low-resolution hardware device to make a spectral measurement of a visible light spectrum that may be reconstructed to a comparatively corresponding high-resolution spectrum, the data of which where the minimum full width at half maximum (FWHM) peak width is smaller than the FWHM of the narrowest channel response function.

When using a spectrometer, the resolution may be determined by a number of channels p. Hence, the question is how to we maximize the amount of useful information while minimizing the number of channels to p. In order to determine which information is useful it is important to have available a set of a plurality of n determined visible light spectra / spectral profiles at a resolution d, the resolution d being greater than the resolution p, the visible light spectra corresponding to typically expected spectra to encounter during measurements with the spectrometer.

The spectrometer comprises a number p of optical sensors arranged at locations in the spectrometer corresponding each to an attributed measurable wavelength of the visible light.

It to sought to determine the minimum number for the p channels such that a reconstruction error is kept below a predetermined acceptable threshold. This error will increase and decrease depending on where the channels are placed along the frequency domain. In the following, an approach is presented whereby we 'learn' the optimal placement of the channels by identifying regularities in a pre-compiled reference library L of spectral profiles.

For most spectral applications, data already exists in open access data sets, e.g., NASA's ECOSTRESS. What this means is that given some expert knowledge about the type of spectra which will be measured, a library of spectra L can be compiled (or simulated) beforehand, which contains spectra similar to the spectra which will be measured with the device. If L is compiled from n spectral observations each with length d then L is a d x n rectangular matrix.

From the matrix L we can compute a vector of the p channel peak wavelengths by selecting the first p channels with the highest 'evenness' defined by J closest to 1. For each possible channel we can compute the evenness by

$$J = H'/H_{max}$$

where

$$H' = -\sum_{j=1}^{R} u_i \ln u_i$$

where

$$R = 1/e$$

where e is the error of the channel in the intensity domain such that if the percent error is 2% then e = 0.02. and where $u_i$ is the number of spectra which produce a relative intensity value between i*e and i*e + e at a given channel location (i.e. wavelength) divided by the total number of spectra which pass through at any intensity at that specific wavelength channel (this should be equal to n, the number of spectra in the library L).

$$H_{max} = \ln(R)$$

The first p number of candidate wavelengths which produce values of J closest to 1 are selected as the locations of the sensor channels such that no two channels are directly adjacent.

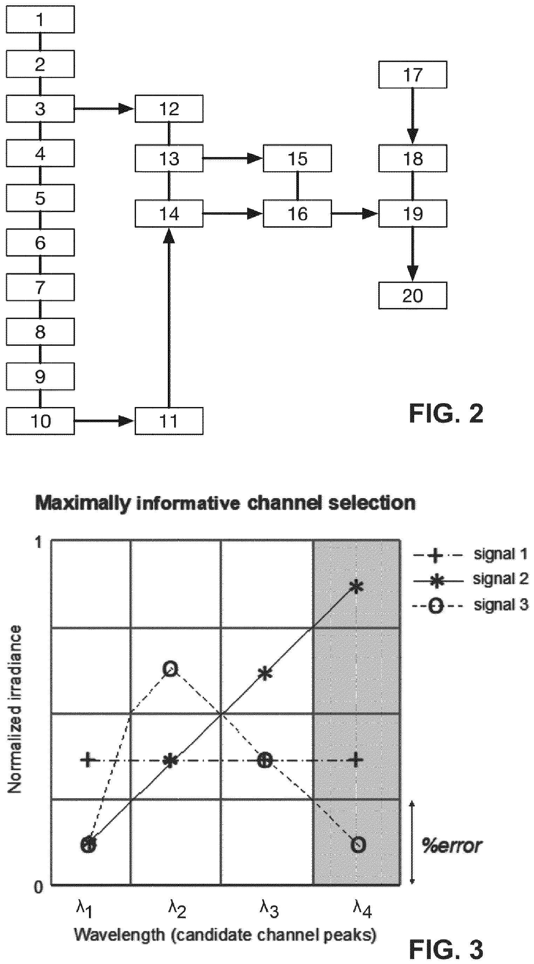

A way to see this graphically is illustrated in Figure 3, where we show a simplified representation of our library L containing only 3 signals. At each wavelength each signal has a distinct value on the irradiance axis. If two signals have the same value at a wavelength $\lambda_i$ then those signals cannot be uniquely identified with a 1-channel sensor with a peak value at $\lambda_i$. However, if there exists another channel e.g. $\lambda_p$ where each spectrum is uniquely identifiable, then a 1-channel sensor could correctly identify all 3 signals. Towards this end, even if the library L contains thousands of spectra, the sensor with the evenmost indices will provide the most unique low-dimensional representation of the spectra in L.

Once the optimal wavelengths are found, sensors of the low-resolution hardware device can either be manufactured for specific use cases or tuned to the optimal sensitivities if they are programable, e.g., by means of tunable plasmonic filter arrays.

Figure 2 represents a flowchart of an example embodiment of the invention with 20 specific steps to be performed to go from identifying a set of relevant spectral signatures (2) to deriving the task-specific sensor configuration (9-10) to the construction of a reference set of spectral priors to improve spectral reconstruction (12-14) and lastly the measurement process (17-20). The steps are defined as follows:

- 1. Identify a task;
- 2. Identify n spectra which are likely to be measured during the task;
- 3. Compile these spectra into a d × n array called L where d is the number of wavelengths;
- 4. Derive a symmetric affinity matrix A with dimensions d x d from an appropriate distance metric (e.g. Euclidean distance);
- 5. Cluster A into p clusters using the SymNMF algorithm;
- 6. Return the p clusters;
- 7. Compute the evenness of all elements in all clusters;
- 8. Return one wavelength per cluster corresponding to the element with the greatest evenness;
- 9. Construct response functions for p channels by setting the peak wavelengths to the wavelengths corresponding to the greatest evenness for each of the p channels;
- 10. Program these response functions into a sensor either via tunable plasmonic filters or by designing filters with the response functions hardcoded;
- 11. Derive a mathematical model Q of the sensor encoding process using the sensitivity response functions such that Q(signal) = sensor output;
- 12. Derive a symmetric affinity matrix A with dimensions n x n using the spectral angle mapper (SAM) similarity measure to cluster the spectra in L in k groups by minimizing the objective function;
- 13. Return the k cluster centers by taking the median of the cluster elements;
- 14. Use the k cluster centers as a training set to find the bestfit parameters in the reconstruction algorithm for each of the k spectra;
- 15. Dimension reduce all k spectra such that they represent simulated sensor outputs (e.g. p = Q(s));
- 16. Output these paramters and store them in an array P;
- 17. Measure a spectrum with the sensor configured with the appropriate response functions;
- 18. Find the closest match between the simulated low-resolution copies of the k spectra and the measured spectral output;
- 19. Reconstruct the spectrum using the best fit parameters for the closest spectrum in the training set;
- 20. Return the reconstructed spectrum s.

The order of execution and links between steps are indicated by lines and arrows in figure 2.

In a second aspect, the invention concerns a system and a method that enable to reconstruct a high-resolution spectrum from a spectral measurement of a visible light spectrum made with a comparatively low-resolution hardware device, which was configured as explained herein above in line with the first aspect of the invention. In this sense, let us assume that we have now picked response functions at optimal wavelengths and we now have a sensor having p channels which will optimally encode the spectral data using we want to measure. The burden of recovering the original high-resolution data is now on the design of a reconstruction algorithm. For simplicity we will call the encoder function, i.e., the optimal response function of the spectrometer configured as explained herein above, Q such that Q encodes a comparatively high-resolution spectrum s to a low-dimensional spectrum/vector p. Mathematically this is represented as p = Q(s).

We know that a spectrum being measured in the real world is likely a combination of light sources. Towards this end we can represent any spectrum s as a linear combination of light sources in some pre-compiled library L. In other words, s ≈ s' = x*L where x is some coefficient vector which indicates how much each spectrum in L contributes to the reconstructed version of s. If the reconstruction is perfect, then s = s' but this is rarely the case in practice. What tends to happen is that finding an approximate representation of s is an ill-posed problem. Furthermore, we have two unknowns: x and s making direct solution to this problem impossible.

What we do have is L - compiled in advance - and p (the output of our simulated sensor Q). It is clear that p is not a combination of spectra in L because any spectrum in L has a length / resolution = d and p has a length / resolution << d. However, if we have a good model, i.e., simulation of our sensor, we can artificially degrade the quality of the reference spectra in L to a comparable matrix M = Q(L). Just as s could be represented as a linear combination of columns of L, p can be represented by combinations of columns of M. Since x should be the same regardless of the dimension of the library, we can solve for x by translating the original problem into the 'compressed space' such that p = xM. However, there are still many spectra in M which will not contribute much to the reconstruction. Towards this end we want to find the first q number of spectra in M which are closest to p as defined as the minimum Euclidean distance metric. This new matrix of q < n low-dimensional spectra is denoted N and used to solve the minimization problem in the compressed space via Tikhonov regularization such that

$$x = \min(\|xN - Q(s)\|_2 + \gamma\|x\|_2)$$

where $\gamma$ is the Tikhonov regularization parameter which can be fit by brute force optimization for some representative training spectra in matrix B. Once x is known, we can find the indices of the entries of M used to create N and return L* = L(idx) = $Q^{-1}(N)$ such that L* contains only the q spectra in N to solve

$$s' = xL*$$

To further improve results a moving average filter is applied to the final reconstructed signal with length h such that

$$s \approx \frac{1}{2h+1}[s'(i+h) + s'(i+h-1) + \ldots + s'(i-h)]$$

where h must also be fit for a set of representative spectra B.

When a new spectrum is measured, we want to find the closest match between one of our compressed reference spectra b in Q(B) and p such that we can use the pre-fit reconstruction parameters ($\gamma$, h, q) for b to reconstruct p. This makes the algorithm 'adaptive' because depending on the similarity of p to any b in Q(B), the parameters will be optimized for spectra of that 'type'. In computer science the set of reference spectra B is called a 'prior' because it is prior knowledge which, when added to the algorithm, improves performance. Finding appropriate priors is a challenging problem and often specific to the type of data being reconstructed.

Here a method of identifying the best set B of spectral 'priors' or 'reference spectra' is disclosed. Just as in the first aspect of the invention herein above, we use the fact that it is possible to pre-compile a set of spectra into a reference library L using some expert knowledge. Since this library could be huge, it is not practical to use the library itself as our set of priors. Instead we will cluster using the SymNMF algorithm on the affinity matrix of the columns of L. In this case we use the columns because the columns represent distinct spectral observations. The first step is to define an affinity matrix A by

$$A_{i,j} = \begin{cases} d(s_i, s_j) & \text{if } i \neq j \\ 0 & \text{if } i = j \end{cases} \quad \text{where} \quad d(s_i, s_j) = \arccos\left[\frac{s_i(\lambda) \cdot s_j(\lambda)}{\|s_i(\lambda)\| \|s_i(\lambda)\|}\right]$$

where $d(s_i, s_j)$ is the spectral angle mapper (SAM) between two spectra in L. The SAM is a widely used metric for assessing spectral similarity although other information theoretic measures could also be used. Once we have our affinity matrix A, we compute the objective function

$$\underset{H \geq 0}{\arg\min} f(H, k) \quad \text{where} \quad f(H, k) = \|A - HH'\|_F^2 \quad (2)$$

For different k number of clusters. In this case, k is the low-rank approximation of A for which A $\approx$ H holds. One requirement is that k must be greater than the number of nonnegative eigenvalues of A. Since the number of clusters in L is unknown, we must compute the objective function for k=$k_0$ to some large (e.g. k = n-1). The optimal number of clusters is found by identifying the point at which the mean and the slope of the objective function changes most dramatically. We can do this analytically by minimizing

$$Z(k) = \sum_{i=1}^{k-1}(f_i(k) - v_i(k))^2 + \sum_{i=1}^{n-1}(f_i(k) - w_i(k))^2$$

Where k goes from 1 to some large ansatz k = n-1 (although smaller k can be used in practice) and v(k) is the best-fit line through k = 1 to k and w(k) is the best fit line through k=k to k=n-1 as defined as the error sum of squares.

This is a more robust version of the 'elbow method' where we essentially are interested in when the number of clusters sufficiently describes the variation in our dataset. Once we find k by minimizing Z(k) we return the first k columns of H as our reference spectra. We then store our reference spectra in a matrix B and find the best fit parameters ($\gamma$, h, q) for each of the columns of B. These parameters are stored in another matrix P such that the first column of P contains the best fit parameters for the reference spectrum in the first column of B.

When we measure an unknown spectrum s with the configured low resolution spectrometer, we get a measured output p = Q(s) which we can then match to any compressed copy b in Q(B) our reference set. Whichever compressed reference b is closest to our unknown compressed measurement p, we use the corresponding reconstruction parameters in P. Towards this end, we maximize performance of the reconstruction algorithm by taking advantage of regularities in L.

**Claims**

1. A computer-implemented method for reconstructing/recovering high-resolution visible light spectral data at a target resolution d, comprising
obtaining a configuration of a low-resolution multi-channel imaging sensor of resolution p, the configuration being enabled to produce measurements results of any one of a plurality of n determined visible light spectra,
the low-resolution multi-channel imaging sensor comprising a number p of optical sensors arranged at locations in the spectrometer corresponding each to an attributed measurable wavelength of the visible light,
the configuration comprising a definition of the attributed measurable wavelength for each location,
the method comprising
obtaining a matrix L comprising a previously measured set of the plurality of n determined visible light spectra at a high-resolution resolution d, the resolution d being greater than the resolution p,
constructing a vector of the p channel peak wavelengths by selecting the first p channels with the highest 'evenness' defined by J close to 1, whereby, for each possible channel we the evenness is obtained by

$$J = H'/H_{max}$$

where

$$H' = -\sum_{j=1}^{R} u_i \ln u_i$$

where

$$R = 1/e$$

where e is the error of the channel in the intensity domain such that if the percent error is ept % then e = ept / 100, and where $u_i$ is the number of spectra which produce a relative intensity value between i*e and i*e + e at a given channel location corresponding to a wavelength, divided by the total number of spectra in the library L which pass through at any intensity at that specific wavelength channel, and

$$H_{max} = \ln(R)$$

and,
selecting the first p number of candidate wavelengths which produce values of J closest to 1 as the locations of the sensor channels such that no two channels are directly adjacent.

2. The computer-implemented method of claim 1, further enabled for reconstructing / recovering high-resolution visible light spectral data at the target resolution d from a new measurement made with the low-resolution multi-channel imaging sensor from claim 1 at the sensor resolution p, the method comprising steps of:

   a) identifying a set of reference spectra as priors, by applying a dimensional reduction algorithm comprising obtaining an affinity matrix A of the columns of L generated by

$$A_{i,j} = \begin{cases} d(s_i, s_j) & \text{if } i \neq j \\ 0 & \text{if } i = j \end{cases} \quad \text{where} \quad d(s_i, s_j) = \arccos\left[\frac{s_i(\lambda) \cdot s_j(\lambda)}{\|s_i(\lambda)\| \|s_i(\lambda)\|}\right]$$

   where $d(s_i, s_j)$ is the spectral angle mapper (SAM) between two spectra $s_i$ and $s_j$ in the library L, applying the symmetric non-negative matrix factorization (SymNMF) algorithm

$$\operatorname*{argmin}_{H>0} f(H,k) \quad \text{where} \quad f(H,k) = \|A - HH'\|_F^2$$

whereby H is non-negative and has dimensions n x k where k is the number of clusters, and finding the number of k priors such that the variance in the objective function f(H,k) is minimized for k > number of nonnegative eigenvalues of A,

b) storing the reference spectra in a matrix B,

c) obtaining a simulated sensor output Q(L) by simulating the low-resolution multi-channel imaging sensor for each spectrum in the matrix L by applying a mathematical model for the multi-channel imaging sensor to each spectrum in the matrix L where

$$Q_i(s) = (\int_{\lambda 1}^{\lambda 2} s(\lambda) * R_i(\lambda) d\lambda)/(0.21 * \delta_i)$$

where $I = 1,...,p$ and $\lambda_1$ and $\lambda_2$ are the minimum and maximum wavelengths of the measured range of the sensor and $\delta_I$ is the full width at half maximum of the $i^{th}$ channel response function $R_i(\lambda)$, and 0.21 is a constant valid only if $s(\lambda)$ is first normalized with the infinite norm $L_\infty$ ;

d) compiling the simulated sensor output Q(L) spectra into a matrix M of entry vectors of length p corresponding respectively to one of the simulated sensor output spectra;

e) comparing a new measurement Q(s) to a low dimensional copy m from the matrix M, by identifying the q-closest matches as defined as the Euclidean distance between p and a column of M, and in turn returning a new matrix N comprising the q-closest matches in M to the measured spectrum and their corresponding indices idx in M;

f) obtaining the best fit parameters for each of the reference spectra by comparing the known inputs for each of the reference spectra in B to the reconstructed output and storing the best fit parameters in a matrix P, such that the first column of P contains the best fit parameters for the reference spectrum in the first column of B;

g) obtaining to the best fit parameters in the $i^{th}$ column of matrix P by finding the closest match between $Q(B_i)$ and Q(s) using the Euclidean distance;

h) obtaining the reconstructed spectrum by solving

$$x = \min(\|xN - Q(s)\|_2 + \gamma \|x\|_2 )$$

such that

$$s' = xL(idx)$$

and using only the high-resolution copies in L corresponding to the low-resolution copies in N in a final reconstruction

and

$$s = \frac{1}{2h+1} [s'(i+h) + s'(i+h-1) + ... + s'(i-h)]$$

such that the reconstruction parameters h, $\gamma$, and q are used for the nearest reference spectra in B to recover the corresponding high-resolution spectrum from the low-dimensional sensor output Q(s).

3. The method of any one of claims 1 or 2, wherein low-resolution visible light spectral data are obtained from a multi-channel imaging sensor comprising between 1 and 20 channels.

4. The method of any one of claims 1 to 3, wherein regularization parameters and reconstruction of the closest match are performed through an adaptive regularization method including dictionary optimization, Tikhonov regularization, and smoothing with a moving average filter.

5. A non-transitory computer-readable medium storing instructions that, when executed by a data processing apparatus, cause the data processing apparatus to perform the method of claims 1 to 4.

6. The non-transitory computer-readable medium of claim 5, wherein the data processing apparatus comprises any one of a computer and a microchip.

7. A low-resolution multi-channel imaging sensor operatively connected with a data processing apparatus comprising instructions configured to operate the multi-channel imaging sensor to perform the method of claims 1 to 4.

8. The low-resolution multi-channel imaging sensor of claim 7, wherein the data processing apparatus comprises any one of a computer and a microchip.

**FIG. 1**

FIG. 2

## Maximally informative channel selection

FIG. 3

Europäisches
Patentamt

European
Patent Office

Office européen
des brevets

# EUROPEAN SEARCH REPORT

**Application Number**

EP 20 21 0657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VALERO EVA M. ET AL: "Comparative performance analysis of spectral estimation algorithms and computational optimization of a multispectral imaging system for print inspection", COLOR RESEARCH & APPLICATION, vol. 39, no. 1, 1 February 2014 (2014-02-01), pages 16-27, XP055799078, US ISSN: 0361-2317, DOI: 10.1002/col.21763 * abstract * * page 16 * * page 18, column 2 * * page 24 - page 25 * | 1-8 | INV. G06T3/40 G01J3/00 |
| A | JONEIDI MOHSEN ET AL: "E-Optimal Sensor Selection for Compressive Sensing-Based Purposes", IEEE TRANSACTIONS ON BIG DATA, IEEE, vol. 6, no. 1, 31 August 2018 (2018-08-31), pages 51-65, XP011775440, DOI: 10.1109/TBDATA.2018.2868120 [retrieved on 2020-02-27] * abstract * | 1-8 | |
| | | | TECHNICAL FIELDS SEARCHED (IPC) |
| A | REI KAWAKAMI ET AL: "High-resolution hyperspectral imaging via matrix factorization", COMPUTER VISION AND PATTERN RECOGNITION (CVPR), 2011 IEEE CONFERENCE ON, IEEE, 20 June 2011 (2011-06-20), pages 2329-2336, XP032037959, DOI: 10.1109/CVPR.2011.5995457 ISBN: 978-1-4577-0394-2 * abstract * | 1-8 | G06T G01J |

The present search report has been drawn up for all claims

| Place of search | Date of completion of the search | Examiner |
|---|---|---|
| Munich | 27 April 2021 | Millet, Christophe |

EPO FORM 1503 03.82 (P04C01)